# EUROPEAN PATENT SPECIFICATION

(11) **EP 1 302 742 B1**
(45) Date of publication and mention of the grant of the patent: **30.03.2016**
(21) Application number: 01830647.2
(22) Date of filing: 16.10.2001
(51) Int. Cl.: G01B 11/24, G01B 11/245, G01B 11/04

(54) **Optoelectronic scanning system for determining the shape and/or volume of objects**
Optoelektronisches Rastersystem zur Messung der Form und/oder des Volumens von Körpern
Système de balayage optoéléctronique pour déterminer la forme et/ou le volume d'objets

(43) Date of publication of application: 16.04.2003
(73) Proprietor: Datalogic IP Tech S.r.l., Calderara di Reno (BO) (IT)
(72) Inventor: Pilone, Ciro, Adelmo, 40012 Calderara di Reno (IT); Marchi, Paolo, 40026 Imola (IT)
(74) Representative: Cerbaro, Elena

(56) References cited:
- EP-A- 0 265 560
- DE-A- 3 919 917
- DE-A- 19 511 782
- GB-A- 2 174 195
- US-A- 4 417 817

## Description

The present invention relates to an optoelectronic scanning system for determining the shape and/or volume of objects.

As is known, known optoelectronic scanning devices for determining the shape and/or volume of objects measure the distances of the outer surfaces of an object with respect to a predetermined reference point to determine the dimensions, i.e. shape and/or volume, of the object.

Currently used optoelectronic scanning devices for measuring the dimensions of an object comprise a light-emitting circuit having, for example, a LASER photoemitter for generating a light beam in a predetermined direction; and an optical assembly defined by a number of mirror elements for deflecting the beam generated by the photoemitter and "channeling" it onto the various surfaces of the scanned object.

Optoelectronic scanning devices of the above type also comprise a light-receiving circuit for picking up the beam reflected by a given surface portion of the object and converting it into an electric signal, the voltage/current-time pattern of which is related to the distance between the surface portion point struck by the beam and the predetermined point; and an electronic circuit for controlling the light-emitting and - receiving circuits to synchronize emission and reception of the beams, and for processing the electric signals produced by the reflected beams to determine the surface distances and, hence, the volume of the object.

The optical assemblies of known optoelectronic scanning devices comprise polygonal mirror rotors, which are rotated about their longitudinal axis to scan the object surfaces, possibly with the aid of a parabolic mirror.

The presence of polygonal mirror rotors makes optoelectronic devices of the above type unreliable, relatively rigid, and structurally complex.

Polygonal mirror rotors also seriously impair the performance of optoelectronic scanning devices in terms of scanning speed. More specifically, the mirrors fitted to polygonal rotors are subjected, as the rotor rotates, to a centrifugal force proportional to the mass of the mirrors and to the square of the rotation speed of the rotor, so that structural limitations obviously impose a maximum rotor speed, over and above which, breakage or detachment of the mirrors from the rotor is likely to occur.

Finally, optoelectronic scanning devices have the drawback of failing to provide for accurately determining the shape of the object. More specifically, shape detection is affected by errors in perspective caused, firstly, by measuring resolution varying according to the distance between the beam impact point and the reference point, and, secondly, by the formation of shadow wedges at the edges of the object surfaces.

DE3919917 discloses a coordinate system with a position sensitive detector that works on the triangulation principle and capable of evaluating the diffuse reflection from the object, e.g. robot arm. A number of light sources is placed in series in the form of a matrix. Their distances to each other and main radiation angles w.r.t. the plane of the matrix are known. At least one position sensitive detector is installed at the side of the matrix at a given angle between 90 and 180 deg. to the matrix plane to cover, with the transmitted beams of the light sources, an optically active space. An electrical evaluating unit is assigned to the dectector.

Moreover, optoelectronic scanning systems are known from eg. EP0265560 and GB2174195. The systems disclosed therein provide a line of light emitting units for sequentially generating light beams to illuminate the object which is moved on a conveyor.

It is an object of the present invention to provide a straightforward, low-cost optoelectronic scanning system for determining the shape and/or volume of objects, and which at the same time is designed to eliminate the aforementioned drawbacks.

According to the present invention, there is provided an optoelectronic scanning system for determining the shape and/or volume of objects, comprising: at least one optoelectronic scanning device comprising a number of light-emitting units located along a first axis and for sequentially generating a number of light beams perpendicular to the first axis and defining a scanning plane; and at least one light-receiving unit for picking up the beams reflected by a respective point on an edge at the intersection between said scanning plane and said object, and for supplying a number of signals containing information about said edge; conveying means for controlling relative translation between said scanning plane and said object; measuring means for supplying a position signal indicating the instantaneous position of the object with respect to said scanning plane; and processing means for receiving and processing the position signal and the number of signals containing information about said edge of the object formed in the course of said translation, so as to determine the shape and/or volume of the object; said processing means being arranged for determining, for each received beam, two dimensions of the respective impact point, a first dimension containing the information relative to the position of the impact point of the beam with respect to said first axis and a second dimension containing the information relative to the position of the impact point of the beam with respect to a second axis lying in said scanning plane and being perpendicular to said first axis.

A non-limiting embodiment of the present invention will be described by way of example with reference to the accompanying drawings, in which:
Figure 1 shows a schematic view in perspective of an optoelectronic scanning system for determining the shape and/or volume of objects in accordance with the teachings of the present invention;
Figure 2 shows a schematic view in perspective of an optoelectronic scanning device forming part of the Figure 1 system;
Figure 3 shows a block diagram of a processing circuit of the Figure 1 system;
Figure 4 shows a schematic view in perspective of a variation of the optoelectronic scanning device forming part of the Figure 1 system.

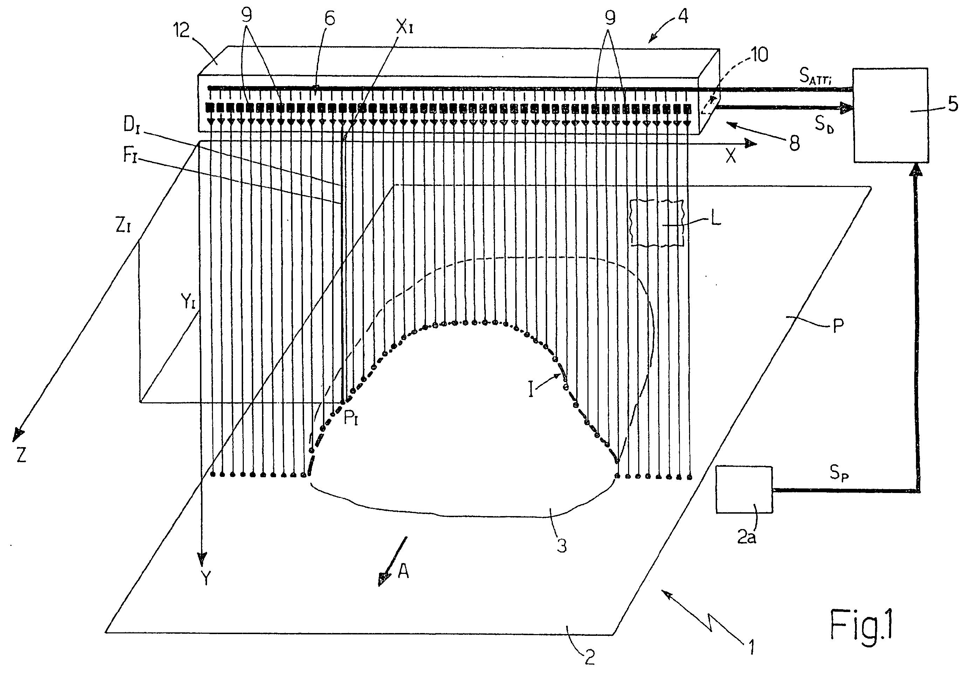

Number 1 in Figure 1 indicates as a whole an optoelectronic system for determining the shape and/or volume of an object.

In the Figure 1 example, optoelectronic system 1 comprises a linear conveyor 2 for feeding at least one object 3 on a substantially horizontal surface P in a feed direction A parallel to surface P; an optoelectronic scanning device 4 located over linear conveyor 2 and for optically scanning an edge I of object 3 defined by the intersection between object 3 and a scanning plane L substantially perpendicular to feed direction A of linear conveyor 2, so as to supply information signals indicating the dimensions of edge I of object 3; a measuring device 2a for determining, instant by instant, the position of object 3 on linear conveyor 2 with respect to scanning plane L, and for supplying a position signal S_{P} indicating the detected position; and a processing circuit 5 for processing, instant by instant, both the information signals relative to edges I of object 3 scanned by optoelectronic scanning device 4, and the position signal S_{P} supplied by measuring device 2a, so as to determine the shape and/or volume of object 3.

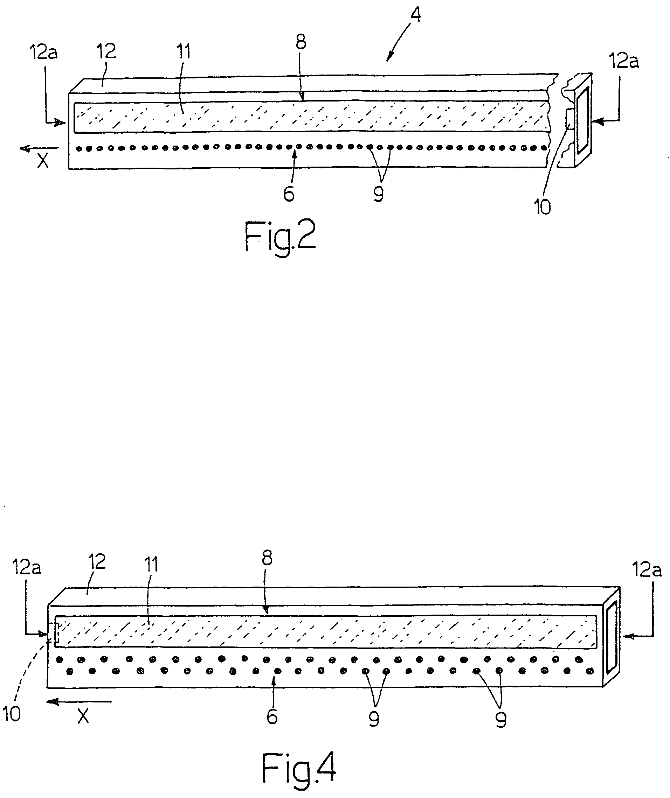

With reference to Figures 1 and 2, optoelectronic scanning device 4 comprises a number of light-emitting units 6 located along an axis X perpendicular to feed direction A and parallel to surface P, and for sequentially generating N number of parallel light beams F_{I} defining scanning plane L.

Optoelectronic scanning device 4 also comprises a light-receiving unit 8 for picking up, instant by instant, each beam F_{I} reflected by a respective point P_{I} on edge I, and for converting the received beam F_{I} into a respective electric signal S_{D}, the voltage/current-time pattern of which is related to the distance D_{I} between the impact point P_{I} of beam F_{I} on edge I of object 3, and a predetermined reference point in optoelectronic scanning device 4.

Each light-emitting unit 6 of optoelectronic scanning device 4 comprises a known emitter 9 - e.g. a LASER photoemitter 9, preferably, though not necessarily, operating in the infrared range - which is fitted to optoelectronic scanning device 4 to face linear conveyor 2 and "project" beam F_{I} onto object 3 on linear conveyor 2.

Each photoemitter 9 is controlled by processing circuit 5, which is described in detail later on, and which provides for appropriately synchronizing beam emission and reception by photoemitters 9 and light-receiving unit 8 respectively.

Light-receiving unit 8 comprises a photoreceiver 10 for converting each received beam F_{I} into electric distance signal S_{D}; and an optical receiving header 11 for conveying to photoreceiver 10 the beams F_{I} reflected by impact points P_{I} on edge I of object 3.

Photoreceiver 10 may be defined, for example, by an avalanche photodiode or a multiplier phototube, and optical header 11, for example, by a parabolic mirror portion capable of "projecting" each beam Fᵣ to photoreceiver 10. Optical header 11 may also be defined by a Fresnel lens (with the photoreceiver centered in optoelectronic scanning device 4), or by a large optical fiber for "channeling" the received beam to a predetermined point.

With reference to Figure 2, optoelectronic scanning device 4 comprises a preferably, though not necessarily, parallelepiped-shaped supporting case 12 of given length (e.g. 60, 80, 100 cm) for supporting photoemitters 9, photoreceiver 10, and optical header 11.

It should be pointed out that optoelectronic scanning device 4 is positioned, with respect to linear conveyor 2, so that the longitudinal axis of supporting case 12 is crosswise to feed direction A of linear conveyor 2.

More specifically, photoemitters 9 are located on the bottom surface of supporting case 12, i.e. the surface facing linear conveyor 2, and are equally spaced parallel to the longitudinal axis of supporting case 12. In other words, photoemitters 9 are arranged on the bottom surface of supporting case 12 to define a linear array of photoemitters 9 covering the whole length of supporting case 12.

Optical header 11 is also located on the bottom surface of supporting case 12, and preferably, though not necessarily, extends alongside photoemitters 9 and parallel to the longitudinal axis of supporting case 12; while photoreceiver 10 (in the Figure 2 example) is located on the lateral surface of supporting case 12 to receive the beam chaneled by optical header 11.

Optoelectronic scanning device 4 may therefore be designed for mechanical and electric connection to other optoelectronic scanning devices 4, so as to form a modular structure (not shown) for scanning an edge I of any length. For which purpose, the lateral end surfaces of supporting cases 12 are provided with expansion connectors 12a (Figure 2) by which to mechanically and electrically connect a number of optoelectronic scanning devices 4 for scanning edges of any scanning length along axis X.

In addition to coordinating beam emission and reception, processing circuit 5 also provides for determining distances D_{I} of impact points P_{I} relating to a given edge I of object 3.

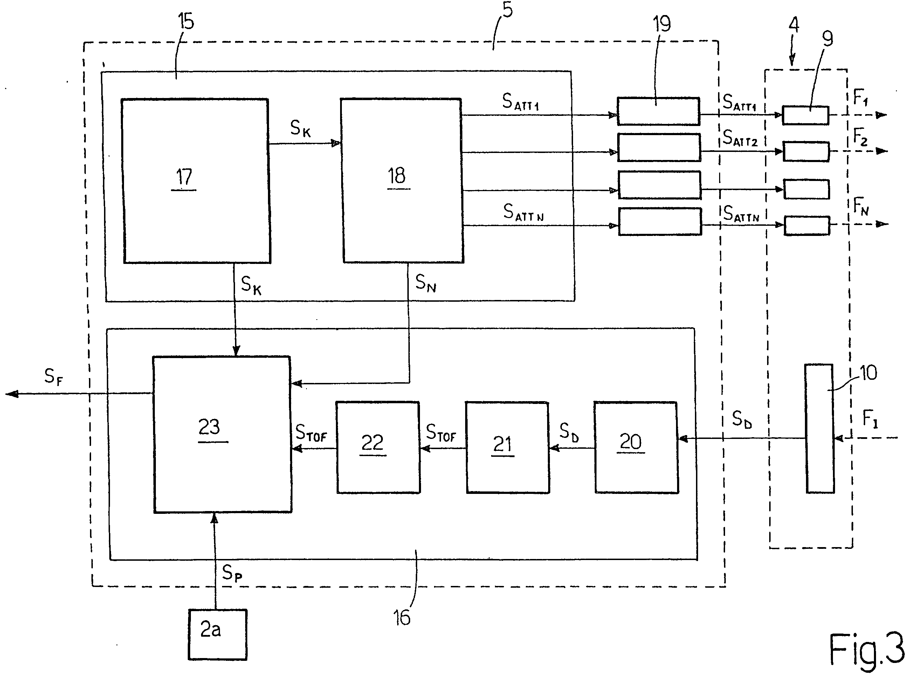

With reference to Figure 3, processing circuit 5 comprises an emission control circuit 15 for generating a number of electric activating signals S_{ATTi} (where i ranges between 1 and N) which are supplied to respective photoemitters 9 to sequentially emit beams F_{I}; and a reception control circuit 16, which, in time with emission control circuit 15, receives and processes the electric distance signals S_{D} of points P_{I} from photoreceiver 10 to obtain information relative to distances D_{I} of the object surfaces struck by beams F_{I}.

Emission control circuit 15 comprises a signal-generating circuit 17 for generating a clock signal Sk; and a timing circuit 18 for receiving clock signal Sk and cyclically generating, as a function of clock signal Sk and in a predetermined order, N electric activating signals S_{ATTi} (where i ranges between 1 and N), which are supplied, via N modulators 19, to respective N photoemitters 9 to sequentially activate emission of beams F_{I} by photoemitters 9.

When the scanning cycle of one edge I of object 3 is completed, i.e. when all N photoemitters 9 have been activated sequentially, timing circuit 18 provides for performing another scanning cycle by activating the N photoemitters 9 in the predetermined order to scan the next edge I of object 3.

It should be pointed out that the activating signal S_{ATTi} generated by timing circuit 18 comprises a "package" of M equally spaced electric pulses of given amplitude (e.g. voltage), and which are supplied to photoemitter 9 to emit a beam F_{I} also comprising a "package" of M light pulses.

In addition to controlling sequential emission of beams F_{I}, timing circuit 18 also generates a signal S_{N} indicating, instant by instant, the active photoemitter 9.

In the example shown, signal S_{N} allows system 1, and in particular processing circuit 5, to determine a first information item relative to edge I of object 3, and namely the position of impact point P_{I} (on edge I) of the given beam F_{I} with respect to axis X. For the sake of simplicity, the position, i.e. "coordinate", of impact point P_{I} with respect to axis X is hereinafter referred to as X_{I} (Figure 1).

Reception control circuit 16 comprises an amplifying circuit 20, which may be defined, for example, by wide-band amplifiers, and is connected to photoreceiver 10 to receive, instant by instant, the electric distance signal S_{D} generated by converting into an electric signal the beam F_{I} reflected by point P_{I} on edge I of the surface of object 3, when the surface is struck by the beam F_{I} emitted by the i-th photoemitter 9 at instant ti. More specifically, amplifying circuit 20 provides for "stabilizing" the amplitude of electric distance signal S_{D}, i.e. maintaining a predetermined amplitude value of the electric pulses obtained from the reflected light pulses.

Reception control circuit 16 also comprises a pulse-forming circuit 21, which receives electric distance signal S_{D} from amplifying circuit 20, and forms and generates a signal S_{TOF} comprising a number of pulses of respective durations related to the " time-of-flight " of the respective light pulses from photoemitter 9 to photoreceiver 10. More specifically, the duration of each electric pulse in signal S_{TOF} is related to the time taken by the respective light pulse to travel both from photoemitter 9 to the surface of the object, and from the surface of the object to photoreceiver 10. In other words, the duration of each electric pulse in signal S_{TOF}, i.e. the "time-of-flight", contains information regarding the distance D_{I} between the impact point P_{I} on edge I and the predetermined reference point located, for example, at the receiving point of photoreceiver 10.

In connection with the above, it should be pointed out that signal S_{TOF} allows system 1, and in particular processing circuit 5, to determine a second information item relative to edge I of object 3, and namely the position of impact point P_{I} (on edge I) of the given beam F_{I} with respect to an axis Y lying in scanning plane L and perpendicular to axis X. For the sake of simplicity, the position, i.e. "coordinate", of impact point P_{I} with respect to axis Y is hereinafter referred to as Y_{I} (Figure 1).

Reception control circuit 16 also comprises a filtering circuit 22, which receives signal S_{TOF} from pulse-forming circuit 21, and converts the pulses in signal S_{TOF} into a single analog signal S_{TOF} of a voltage or current related to distance D_{I} and, therefore, to position Y_{I}.

Reception control circuit 16 also comprises a microprocessor 23, which is connected to filtering circuit 22, timing circuit 18, and measuring device 2a to receive signal S_{TOF}, signal S_{N} and position signal S_{P} respectively, and to process these signals to determine the shape and/or volume of object 3.

Microprocessor 23 also receives clock signal Sk generated by the clock circuit and for synchronizing emission control circuit 15 and reception control circuit 16.

Measuring device 2a (Figure 1) may be defined by a known, e.g. position, ENCODER located on linear conveyor 2 to supply, instant by instant as object 3 is fed along linear conveyor 2, position signal S_{P} indicating the position of object 3.

Position signal S_{P} allows processing circuit 5 to determine a third information item relative to the shape of object 3, and namely the position of each impact point P_{I} on edge I of object 3 with respect to an axis Z parallel to feed direction A of linear conveyor 2. For the sake of simplicity, the position, i.e. "coordinate", of impact point P_{I} with respect to axis Z is hereinafter referred to as Z_{I}.

As opposed to a position ENCODER, measuring device 2a may, obviously, be defined by a speed ENCODER for supplying instant by instant a signal indicating the traveling speed of linear conveyor 2, and by which microprocessor 23 can determine the position of object 3 along axis Z with respect to scanning plane L.

With reference to Figure 3, microprocessor 23 determines a first dimension X_{I} from signal S_{N}, i.e. the information item relative to the position of impact point P_{I} of beam F_{I} with respect to axis X; a second dimension Y_{I} from distance signal S_{TOF}, i.e. the information item relative to the position of impact point P_{I} of beam F_{I} with respect to axis Y; and a third dimension Z_{I} from position signal S_{P}, i.e. the information item relative to the position of impact point P_{I} of beam F_{I} with respect to the Z axis; so that, at the end of each scanning cycle, microprocessor 23 is able to determine an edge I of object 3 by processing the three dimensions of N impact points P_{I} on edge I of object 3.

Microprocessor 23 can also memorize each scanned edge I and the third dimension Z_{I} of each of the impact points P_{I} on the same edge I.

By processing the information relative to the two dimensions (X_{I} and Y_{I}) of the M edges I supplied by optoelectronic scanning device 4 as object 3 travels through scanning plane L, and the information relative to positions Z_{I} of each edge I with respect to axis Z, microprocessor 23 is able to determine the shape and/or volume of object 3, and to generate a signal S_{F} containing information relative to the resulting shape and/or volume.

In connection with the above, it should be pointed out that optoelectronic scanning device 4 performs the function of a two-dimensional static edge scanning device, which generates a signal containing a first and second information item indicating the dimensions of an edge I of an object 3 determined with respect to a first reference axis (axis X) and a second reference axis (axis Y) respectively.

In actual use, light-emitting unit 6, forming part of optoelectronic scanning device 4 and controlled by emission control circuit 15, activates the N photoemitters 9 sequentially in orderly manner to generate N beams defining scanning plane L through which objects 3 on linear conveyor 2 are fed.

At the same time, light-receiving unit 8, forming part of optoelectronic scanning device 4, picks up, via photoreceiver 10, the beams reflected by points P_{I} on edge I of object 3; and reception control circuit 16 determines, for each received beam F_{I}, the two dimensions (X_{I} and Y_{I}) of the respective impact point P_{I}.

Microprocessor 23 begins receiving and memorizing the three dimensions Z_{I}, X_{I}, Y_{I} of impact point P_{I} of each beam F_{I} as object 3 intersects scanning plane L produced by the beams.

At the end of each scanning cycle, microprocessor 23 processes the N dimensions X_{I}, Y_{I}, Z_{I} of the N scanned points, and determines edge I, which is then memorized together with the respective position (dimensions Z_{I}). It should be pointed out that, since the traveling speed of linear conveyor 2 is a few orders of magnitude less than the scanning speed of optoelectronic scanning device 4 along axis X, dimensions Z_{I} calculated in each scanning cycle are substantially the same for all N impact points P_{I}, so that, in the course of a complete scanning cycle of edge I, the movement of object 3 in feed direction A by linear conveyor 2 can be considered negligible.

Microprocessor 23 stops memorizing the M edges and M positions of edges I when object 3 no longer intersects scanning plane L. Which condition may be determined, for example, when distances D_{I} in a complete scanning cycle equal a reference threshold equal, for example, to the distance between optoelectronic scanning device 4 and surface P of linear conveyor 2.

By processing the M edges and M edge positions, microprocessor 23 is able to determine the shape and/or volume of object 3.

System 1 has the major advantage of featuring no mirror actuating devices, and so ensuring a high degree of reliability and faster scanning speeds than any known scanner featuring a polygonal mirror rotor.

The system also has the advantage of measuring the shape or volume of objects with no errors in perspective, i.e. regardless of the distance of the impact point of the beam on the surface of the object. That is, emitting parallel beams ensures substantially constant resolution along axes X and Y, and eliminates the problem of shadow regions typically associated with rotor-type scanners.

Finally, the possibility of electrically and mechanically connecting a number of optoelectronic scanning devices in series provides for a high degree of versatility of the system. More specifically, besides forming a modular structure, in which they are aligned along the same axis to "cover" any length, the optoelectronic scanning devices can also be arranged to form a "gantry" structure (not shown), in which one or a number of connected optoelectronic scanning devices are arranged along axis X, and one or more along axis Y, so that the system can be used to scan superimposed packs of different dimensions, or the shape of objects with holes or lateral recesses.

In connection with the above, it should be pointed out that, as opposed to one "row" of photoemitters 9, optoelectronic scanning device 4 may comprise a number of linear arrays of photoemitters 9 arranged parallel to the longitudinal axis of supporting case 12.

Figure 4, for example, shows an optoelectronic scanning device 4 comprising two parallel arrays of photoemitters 9 arranged in a substantially five-spot pattern, which provides for reducing the distance between photoemitters 9 along axis X and so improving resolution of the system.

It should be pointed out that the photoemitter arrays may lie in the same or different planes; and the end photoemitters 9 in each array may be used to project the respective beams onto permanently free surface portions of linear conveyor 2 to indicate correct positioning of the optoelectronic scanning device with respect to the linear conveyor. For this purpose, the ends of the linear array may be provided with LASER photoemitters 9 operating in the red range to assist the fitter in correctly positioning optoelectronic scanning device 4 with respect to linear conveyor 2.

The system may also be provided with a mirror of substantially the same length as optoelectronic scanning device 4 and fitted at a given angle (e.g. 45°) with respect to surface P of linear conveyor 2.

In which case, optoelectronic scanning device 4 is positioned with the bottom surface of supporting case 12 (on which the light-emitting and -receiving units are located) substantially perpendicular to surface P of linear conveyor 2 and to feed direction A, so that the beams emitted by light-emitting unit 6 are projected parallel to surface P onto the mirror, which reflects them to define scanning plane L perpendicular to feed direction A. Providing system 1 with a mirror as described above enables optoelectronic scanning device 4 to be located a minimum distance from linear conveyor 2, thus reducing the overall size of system 1.

Finally, processing circuit 5 or some of its circuit components - such as modulators 19, amplifying circuit 20, pulse-forming circuit 21, and filtering circuit 22 - may be incorporated in optoelectronic scanning device 4.

## Claims

1. An optoelectronic scanning system (1) for determining the shape and/or volume of objects, comprising:
- at least one optoelectronic scanning device (4) comprising a number of light-emitting units (6) located along a first axis (X) and for sequentially generating a number of light beams (F_{I}) perpendicular to the first axis (X) and defining a scanning plane (L); and at least one light-receiving unit (8) for picking up each beam (F_{I}) reflected by a respective point (P_{I}) on an edge (I) at the intersection between said scanning plane (L) and said object (3), and for supplying a number of signals (S_{N}, S_{D}) containing information about said edge (I);
- conveying means (2) for controlling relative translation between said scanning plane (L) and said object (3);
- measuring means (2a) for supplying a position signal (S_{P}) indicating the instantaneous position of the object (3) with respect to said scanning plane (L); and
- processing means (5) for receiving and processing the position signal (S_{P}) and the signals (S_{N},S_{D}) containing information about said edge (I) of the object (3) formed in the course of said translation, so as to determine the shape and/or volume of the object (3);
**characterized in that** said processing means (5) are arranged for determining, for each received beam (F_{I}), two dimensions (X_{I}, Y_{I}) of the respective impact point (P_{I}), a first dimension (X_{I}) containing the information relative to the position of the impact point (P_{I}) of the beam (F_{I}) with respect to said first axis (X) and a second dimension (Y_{I}) containing the information relative to the position of the impact point (P_{I}) of the beam (F_{I}) with respect to a second axis (Y) lying in said scanning plane (L) and being perpendicular to said first axis (X).

2. A system (1) as claimed in Claim 1, **characterized in that** said light-receiving unit (8) converts the received beam (F_{I}) into a respective distance electric signal (S_{D}), the voltage/current-time pattern of which is related to the distance (D_{I}), between the impact point (P_{I}) of said beam (F_{I}) on edge (I) of object (3), and a predetermined reference point in optoelectronic scanning device (4).

3. A system (1) as claimed in Claim 2, **characterized in that** said light-receiving unit (8) comprising one photoreceiver (10) for converting each received beam (F_{I}) into said electric distance signal (S_{D}); and an optical receiving header (11) which extends alongside light-emitting units (6) for conveying to said photoreceiver (10) the beams (F_{I}) reflected by impact points (P_{I}) on edge (I) of object (3).

4. A system (1) as claimed in any one of Claims 2 to 3, **characterized in that** each said light-emitting unit (6) comprises a photoemitter (9) to emit beams (Fi) comprising a number of light pulses; said electric distance signal (S_{D}) is related to the time-of-flight of the light pulse, which is emitted from light-emitting units (6) to said photoreceiver (10).

5. A system (1) as claimed in any one of the foregoing Claims, **characterized in that** said conveying means (2) control relative translation between said scanning plane (L) and said object (3) in a feed direction (A) substantially perpendicular to said scanning plane (L).

6. A system (1) as claimed in Claim 5, **characterized in that** said conveying means (2) comprise a linear conveyor (2) for conveying at least one said object (3) in said feed direction (A) on a surface (P) perpendicular to said scanning plane (L).

7. A system (1) as claimed in any one of Claims 4 to 6 of the foregoing Claims, **characterized in that** said photoemitter (9) is a LASER type.

8. A system (1) as claimed in any one of Claims 3 to 7, **characterized in that** said photoreceiver (10) comprises an avalanche photodiode or a multiplier phototube.

9. A system (1) as claimed in any one of Claims 3 to 8, **characterized in that** said optical header (11) comprises a parabolic-mirror portion or a Fresnel lens or one or more optical fibers.

10. A system (1) as claimed in any one of Claims 4 to 9, **characterized in that** said optoelectronic scanning device (4) comprises at least one supporting case (12) for supporting said photoemitters (9), said at least one photoreceiver (10), and said at least one optical header (11).

11. A system (1) as claimed in Claim 10, **characterized in that** said supporting case (12) is substantially parallelepiped-shaped, and is positioned with its longitudinal axis crosswise to said feed direction (A).

12. A system (1) as claimed in any one of the foregoing Claims, **characterized in that** said optoelectronic scanning device (4) comprises at least one expansion connector (12a) permitting mechanical and electric connection of said optoelectronic scanning device (4) to at least one other optoelectronic scanning device (4).

## Patentansprüche

1. Optoelektronisches Scansystem (1) zum Bestimmen der Form und/oder des Volumens von Objekten, umfassend:
- mindestens ein optoelektronisches Scangerät (4), umfassend eine Anzahl von Licht emittierenden Einheiten (6), die entlang einer ersten Achse (X) und zum sequenziellen Erzeugen einer Anzahl von Lichtstrahlen (F_{I}) senkrecht zur ersten Achse (X) angeordnet sind und eine Scanebene (L) definieren, und mindestens eine Licht empfangende Einheit (8) zum Aufnehmen jedes Strahls (F_{I}), der von einem jeweiligen Punkt (P_{I}) auf einer Kante (I) am Schnittpunkt zwischen der Scanebene (L) und dem Objekt (3) reflektiert wird, und zum Bereitstellen einer Anzahl von Signalen (S_{N}, S_{D}), die Informationen über die Kante (I) enthalten;
- Übertragungsmittel (2) zum Regeln der relativen Translation zwischen der Scanebene (L) und dem Objekt (3);
- Messmittel (2a) zum Bereitstellen eines Positionssignals (Sₚ), das die momentane Position des Objekts (3) in Bezug auf die Scanebene (L) anzeigt; und
- Verarbeitungsmittel (5) zum Empfangen und Verarbeiten des Positionssignals (Sₚ) und der Signale (S_{N}, S_{D}), die Informationen über die Kante (I) des Objekts (3) enthalten, die im Zuge der Translation gebildet werden, um die Form und/oder das Volumen des Objekts (3) zu bestimmen,
**dadurch gekennzeichnet, dass** die Verarbeitungsmittel (5) zum Bestimmen, für jeden empfangenen Strahl (F_{I}), von zwei Maßen (X_{I}, Y_{I}) des jeweiligen Auftreffpunkts (P_{I}) angeordnet sind, wobei ein erstes Maß (X_{I}) die Informationen in Bezug auf die Position des Auftreffpunkts (P_{I}) des Strahls (F_{I}) in Bezug auf die erste Achse (X) enthält, und ein zweites Maß (Y_{I}) die Informationen in Bezug auf die Position des Auftreffpunkts (P_{I}) des Strahls (F_{I}) in Bezug auf eine zweite Achse (Y) enthält, die in der Scanebene (L) liegt und senkrecht zur erste Achse (X) verläuft.

2. System (1) nach Anspruch 1, **dadurch gekennzeichnet, dass** die Licht empfangende Einheit (8) den empfangenen Strahl (F_{I}) in ein jeweiliges elektrisches Abstandssignal (S_{D}) umwandelt, dessen Spannung/Stromstärke-Zeit-Muster sich auf den Abstand (D_{I}) zwischen dem Auftreffpunkt (P_{I}) des Strahls (F_{I}) auf der Kante (I) des Objekts (3) und einem vorgegebenen Bezugspunkt im optoelektronischen Scangerät (4) bezieht.

3. System (1) nach Anspruch 2, **dadurch gekennzeichnet, dass** die Licht empfangende Einheit (8) einen Lichtempfänger (10) zum Umwandeln jedes empfangenen Strahls (F_{I}) in das elektrische Abstandssignal (S_{D}) und einen optischen Aufnahmekopf (11) umfasst, der sich entlang den Licht emittierenden Einheiten (6) erstreckt, um die Strahlen (F_{I}), die von Auftreffpunkten (P_{I}) auf Kante (I) von Objekt (3) reflektiert werden, zum Lichtempfänger (10) zu übertragen.

4. System (1) nach einem der Ansprüche 2 bis 3, **dadurch gekennzeichnet, dass** jede Licht emittierende Einheit (6) einen Lichtsender (9) umfasst, um Strahlen (Fi) zu emittieren, die eine Anzahl von Lichtimpulsen umfassen, wobei das elektrische Abstandssignal (S_{D}) mit der Laufzeit des Lichtimpulses in Beziehung steht, der von Licht emittierenden Einheiten (6) zum Lichtempfänger (10) emittiert wird.

5. System (1) nach einem der vorstehenden Ansprüche, **dadurch gekennzeichnet, dass** die Übertragungsmittel (2) die relative Translation zwischen der Scanebene (L) und dem Objekt (3) in einer Zufuhrrichtung (A) regeln, die im Wesentlichen senkrecht zur Scanebene (L) verläuft.

6. System (1) nach Anspruch 5, **dadurch gekennzeichnet, dass** die Übertragungsmittel (2) ein lineares Förderband (2) zum Fördern von mindestens einem Objekt (3) in der Zufuhrrichtung (A) auf einer Oberfläche (P) senkrecht zur Scanebene (L) umfassen.

7. System (1) nach einem der Ansprüche 4 bis 6 der vorstehenden Ansprüche, **dadurch gekennzeichnet, dass** der Lichtsender (9) vom Typ LASER ist.

8. System (1) nach einem der Ansprüche 3 bis 7, **dadurch gekennzeichnet, dass** der Lichtempfänger (10) eine Lawinen-Photodiode oder einen Photoelektronenvervielfacher umfasst.

9. System (1) nach einem der Ansprüche 3 bis 8, **dadurch gekennzeichnet, dass** der optische Kopf (11) einen Parabolspiegelabschnitt oder eine Fresnellinse oder eine oder mehrere Glasfasern umfasst.

10. System (1) nach einem der Ansprüche 4 bis 9, **dadurch gekennzeichnet, dass** das optoelektronische Scangerät (4) mindestens ein stützendes Gehäuse (12) zum Stützen der Lichtsender (9), des mindestens einen Lichtempfängers (10) und des mindestens einen optischen Kopfes (11) umfasst.

11. System (1) nach Anspruch 10, **dadurch gekennzeichnet, dass** das stützende Gehäuse (12) im Wesentlichen Parallelepiped-förmig ist und mit seiner Längsachse kreuzförmig zur Zufuhrrichtung (A) angeordnet ist.

12. System (1) nach einem der vorstehenden Ansprüche, **dadurch gekennzeichnet, dass** das optoelektronische Scangerät (4) mindestens eine Erweiterungsanschlussstelle (12a) umfasst, die einen mechanischen und elektrischen Anschluss des optoelektronischen Scangeräts (4) an mindestens ein anderes optoelektronisches Scangerät (4) erlaubt.

## Revendications

1. Système de balayage optoélectronique (1) permettant de déterminer la forme et/ou le volume d'objets, comprenant :
- au moins un dispositif de balayage optoélectronique (4) comprenant un nombre d'unités électroluminescentes (6) situées le long d'un premier axe (X) et permettant de générer séquentiellement un certain nombre de faisceaux lumineux (F_{I}) perpendiculaires au premier axe (X) et définissant un plan de balayage (L) ; et au moins une unité de réception de lumière (8) permettant de capter chaque faisceau (F_{I}) réfléchi par un point respectif (P_{I}) sur un bord (I) au niveau de l'intersection entre ledit plan de balayage (L) et ledit objet (3), et permettant d'amener un certain nombre de signaux (S_{N}, S_{D}) contenant des informations concernant ledit bord (I) ;
- des moyens de transport (2) permettant de commander la translation relative entre ledit plan de balayage (L) et ledit objet (3) ;
- des moyens de mesure (2a) permettant de fournir un signal de position (Sₚ) indiquant la position instantanée de l'objet (3) par rapport audit plan de balayage (L) ; et
- des moyens de traitement (5) permettant de recevoir et de traiter le signal de position (Sₚ) et les signaux (S_{N}, S_{D}) contenant des informations concernant ledit bord (I) de l'objet (3) formés au cours de ladite translation, de façon à déterminer la forme et/ou le volume de l'objet (3)
**caractérisé en ce que** lesdits moyens de traitement (5) sont disposés pour déterminer, pour chaque faisceau reçu (F_{I}), deux dimensions (X_{I}, Y_{I}) du point d'impact respectif (P_{I}), une première dimension (X_{I}) contenant les informations relatives à la position du point d'impact (P_{I}) du faisceau (F_{I}) par rapport audit premier axe (X) et une deuxième dimension (Y_{I}) contenant les informations relatives à la position du point d'impact (P_{I}) du faisceau (F_{I}) par rapport à un deuxième axe (Y) se trouvant dans ledit plan de balayage (L) et étant perpendiculaire audit premier axe (X).

2. Système (1) selon la revendication 1, **caractérisé en ce que** ladite unité de réception de lumière (8) convertit le faisceau reçu (F_{I}) en un signal électrique de distance (S_{D}) respectif, dont le motif temporel tension/intensité se rapporte à la distance (D_{I}), entre le point d'impact (P_{I}) dudit faisceau (F_{I}) sur le bord (I) de l'objet (3), et un point de référence prédéterminé dans le dispositif de balayage optoélectronique (4).

3. Système (1) selon la revendication 2, **caractérisé en ce que** ladite unité de réception de lumière (8) comprend un photorécepteur (10) permettant de convertir chaque faisceau reçu (F_{I}) en ledit signal électrique de distance (S_{D}) ; et un collecteur optique de réception (11) qui s'étend à côté des unités électroluminescentes (6) pour le transport vers ledit photorécepteur (10) des faisceaux (F_{I}) réfléchis par les points d'impact (P_{I}) sur le bord (I) de l'objet (3).

4. Système (1) selon l'une quelconque des revendications 2 à 3, **caractérisé en ce que** chaque unité électroluminescente (6) précitée comprend un photo-émetteur (9) permettant d'émettre des faisceaux (Fi) comprenant un certain nombre d'impulsions de lumière ; ledit signal électrique de distance (S_{D}) se rapporte au temps de vol de l'impulsion de lumière, qui est émise des unités électroluminescentes (6) vers ledit photorécepteur (10).

5. Système (1) selon l'une quelconque des revendications précédentes, **caractérisé en ce que** lesdits moyens de transport (2) commandent la translation relative entre ledit plan de balayage (L) et ledit objet (3) dans une direction d'alimentation (A) essentiellement perpendiculaire audit plan de balayage (L).

6. Système (1) selon la revendication 5, **caractérisé en ce que** lesdits moyens de transport (2) comprennent un convoyeur linéaire (2) permettant de transporter au moins un objet précité (3) dans ladite direction d'alimentation (A) sur une surface (P) perpendiculaire audit plan de balayage (L).

7. Système (1) selon l'une quelconque des revendications 4 à 6 des revendications qui précèdent, **caractérisé en ce que** ledit photo-émetteur (9) est un type à LASER.

8. Système (1) selon l'une quelconque des revendications 3 à 7, **caractérisé en ce que** ledit photorécepteur (10) comprend une photodiode à avalanche ou un phototube multiplicateur.

9. Système (1) selon l'une quelconque des revendications 3 à 8, **caractérisé en ce que** ledit collecteur optique (11) comprend une partie de miroir parabolique ou une lentille de Fresnel ou une ou plusieurs fibres optiques.

10. Système (1) selon l'une quelconque des revendications 4 à 9, **caractérisé en ce que** ledit dispositif de balayage optoélectronique (4) comprend au moins un boîtier de support (12) destiné à soutenir lesdits photo-émetteurs (9), ledit au moins un photorécepteur (10) et ledit au moins un collecteur optique (11).

11. Système (1) selon la revendication 10, **caractérisé en ce que** ledit boîtier de support (12) est de forme essentiellement parallélépipédique, et est positionné avec son axe longitudinal transversal à ladite direction d'alimentation (A).

12. Système (1) selon l'une quelconque des revendications précédentes, **caractérisé en ce que** ledit dispositif de balayage optoélectronique (4) comprend au moins un connecteur d'extension (12a) permettant une connexion mécanique et électrique dudit dispositif de balayage optoélectronique (4) à au moins un autre dispositif de balayage optoélectronique (4).
